Europäisches Patentamt

European Patent Office

Office européen des brevets

(11) Publication number: **0 273 978**
**A1**

## (12) EUROPEAN PATENT APPLICATION
published in accordance with Art. 158(3) EPC

(21) Application number: 87903910.5

(22) Date of filing: 11.06.87

Data of the international application taken as a basis:

(86) International application number:
PCT/JP87/00377

(87) International publication number:
WO87/07790 (17.12.87 87/28)

(51) Int. Cl.³: **H 02 P 3/14**

(30) Priority: 13.06.86 JP 137658/86

(43) Date of publication of application:
13.07.88 Bulletin 88/28

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: OTA, Naoto
6-7-3, Hinohonmachi
Hino-shi Tokyo 191(JP)

(72) Inventor: FUCHIGAMI, Hirokazu
14-6, Namiki-cho
Hachioji-shi Tokyo 193(JP)

(74) Representative: Brunner, Michael John et al,
GILL JENNINGS & EVERY 53-64 Chancery Lane
London WC2A 1HN(GB)

(54) REGENERATION CONTROL SYSTEM FOR A SERVO MOTOR.

(57) A regeneration control system for a servo motor (9) of an automatic carrier car which is powered by a storage battery (7) and which effects regeneration control during deceleration. A feedback voltage from a tacho-generator (10) of the servo motor (9) is arithmetically operated by a torque clamp circuit (11), and the output of a speed error amplifier (2) is clamped by a signal obtained from the above operation to limit the regenerated energy to a predetermined value. Thus the instruction value is clamped during regeneration, and a regeneration current that flows through the storage battery (7) is limited.

Fig. 1

EP 0 273 978 A1

- 1 -

# DESCRIPTION

## REGENERATIVE CONTROL METHOD FOR SERVOMOTOR

### Technical Field

The present invention relates to a regenerative control method for a servomotor employed in an automatic carriage vehicle or the like, and more particularly to a regenerative control method for a servomotor which is capable of charging a battery safely with regenerated energy.

### Background Art

Machining and assembling factories, for example, are finding widespread use of automatic carriage or transport vehicles between processing stages in order to make the factories unmanned. In each of positions where the automatic carriage vehicle is stopped, materials or articles carried thereon are automatically unloaded by a robot or the like. It is necessary that the automatic carriage vehicle be moved at a high speed between processing stages and stopped at a precise stop position. Therefore, the automatic carriage vehicle is generally driven by a servomotor which can be operated at a high speed, can be accelerated or decelerated quickly, and can position the automatic carriage vehicle precisely. Since the automatic carriage vehicle needs to be moved freely between processing stages, it would be difficult to supply electric energy to the automatic carriage vehicle from a power supply line. Usually, a chargeable battery is mounted as a driving power supply on the automatic carriage vehicle. For the purpose of saving energy, it is general to use regenerated energy to charge the battery when the automatic carriage vehicle is decelerated and stopped.

If a servoamplifier used does not have a function to control the amount of regenerated energy, then the battery which is directly charged by the supplied regenerated energy might be damaged when the regnerated energy exceeds the maximum allowable current with which the battery can be charged. The automatic carriage vehicle is large in size, and the kinetic energy of the automatic carriage vehicle as it is running is proportional to the square of the speed of travel thereof. Therefore, when the automatic carriage vehicle starts being decelerated, the regenerated energy is considerably large. To avoid the large regenerated energy, the curve of deceleration may be made complex so as to reduce a deceleration time constant when the deceleration is started. This proposal however would result in complex control. The above problem might also be solved by employing a considerably large deceleration constant, but the operation time would be increased.

Specifically, where an automatic carriage vehicle having a total weight of 4 tons is driven by a battery of 48 V, the regenerated electric power is 55 V x 150 A = 8.35 KW. The deceleration time constant T derived therefrom is T = 1.42 (seconds) which is between normally used deceleration time constants, i.e., 1 and 2 seconds. Unless some measures were taken, the regenerated current from the servomotor would exceed the maximum allowable current for the battery.

### Disclosure of the Invention

It is an object of the present invention to provide a regenerative control method for a servomotor which will solve the above problems and can charge a battery safely with regenerated energy.

To solve the above problems, there is provided in accordance with the present invention a regenerative control method for a servomotor to effect regenerative control upon deceleration, the regenerative control method comprising the steps of:

processing a voltage fed back from a speed feedback unit coupled to the servomotor; and

clamping a speed command with a signal produced by processing the voltage to limit regenerated energy to a constant level.

By limiting the regenerated energy to the given level so that the energy used to charge a battery will not exceed a maximum allowable current with which to charge the battery, the battery can be prevented from damage.

Brief Description of the Drawings

FIG. 1 is a block diagram of an embodiment of the present invention;

FIG. 2 is a graph showing a torque vs. speed curve of the embodiment of the invention; and

FIG. 3 is a circuit diagram of a torque clamp circuit for constant power.

Best Mode for Carrying Out the Invention

An embodiment of the present invention will hereinafter be described in specific detail with reference to the drawings.

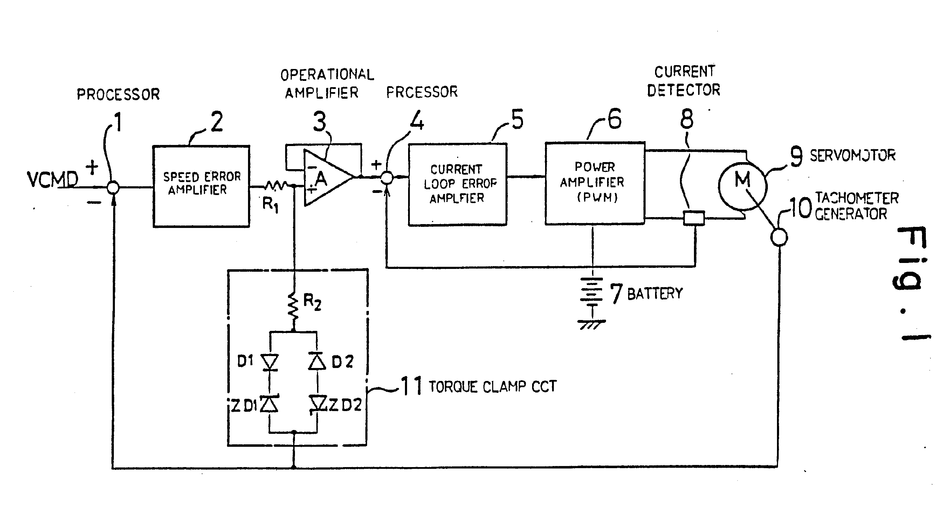

FIG. 1 shows in block form an embodiment of the present invention. Denoted at 1 is a processor supplied with a speed command VCMD. The processor 1 subtracts a speed signal fed back from a tachometer generator (described later on) from the speed command and issues the speed command as an output.

A speed error amplifier 2 amplifies the speed command from the processor 1 and converts the speed command to a torque command. An operational amplifier 3 receives the output from the speed error amplifier 2 and transfers a clamped torque command to a next stage. A processor 4 then subtracts a current signal fed from a motor (described later on) from the clamped torque command. A current loop error amplifier 5 converts the output from the processor 4 to a PWM signal. A power amplifier 6 comprising power transistors or the like amplfies the PWM signal from the current loop error amplifier 4 for driving the motor. the power amplifier 6 is supplied with DC power from a battery 7, which is charged with energy regenerated by a servomotor 9 when the servomotor 9 is decelerated. A current detector 8 detects the current of the servomotor 9 and feeds a current signal back to the processor 4. The DC servomotor 9 is driven by the power amplifier 6 to drive wheels of an automatic carriage vehicle (not shown). A tachometer generator 10 is coupled to the shaft of the servomotor 9 and feeds the rotational speed of the servomotor 9 as a voltage signal back to the processor 1. A torque clamp circuit 11 clamps the torque command of the speed error amplifier 2 with the signal fed back from the tachometer generator 10. Denoted at R1, R2 are resistors, D1, D2 diodes, and ZD1, ZD2 zener diodes.

Operation of the embodiment shown in the block diagram of FIG. 1 will be described below. In normal operation, i.e., a power mode, the speed command VCMD is positive for clockwise rotation, and the servomotor 9 is rotated clockwise. The speed signal fed back from the tachometer generator 10 is positive. Since the voltage difference between the output of the speed error amplifier 2 and the speed feedback signal from the tachometer generator 10 is smaller than a zener voltage 10 V of the zener diode ZD2, no current flows through the diode D2, and the output of the speed error amplifier 2 is applied as it is to the operational amplifier 3.

Upon deceleration, the speed command VCMD is reduced to the extent that the absolute value of the feedback signal from the tachmeter generator 10 becomes larger. The output from the processor 1 becomes negative, and so does the output from the speed error amplifier 2. The output from the current loop error amplifier 5 also becomes negative, and the power amplifier 6 operates in a regenerative mode.

Assuming that the output of the speed error amplifier 2 is indicated by - Vo, the voltage of the feedback signal from the tachometer generator 10 by Vf, and the zener voltage of the zener diode ZD2 by Vz, the input Vi to the lower input terminal of the operational amplifier 3 is expressed by:

$$Vi = \frac{R1}{R1 + R2} (Vf - Vo - Vz) \qquad ...(1)$$

The input of the operational amplifier 3 is clamped by the torque clamp circuit 11. As a result, the regenerated energy in the regenerative mode is clamped to limit the energy with which to charge the battery.

When the servomotor is rotated counterclockwise, the operation is similar except that the speed command VCMD is negative, the feedback signal from the tachometer generator 10 is negative, and the output from the processor 1 upon deceleration is positive. Since the feedback signal from the tachometer generator 10 is negative, and the output of the speed error amplifier 2 is positive upon deceleration, the torque clamping operation is carried out by the zener diode ZD1, the diode D1, and the resistors R1, R2.

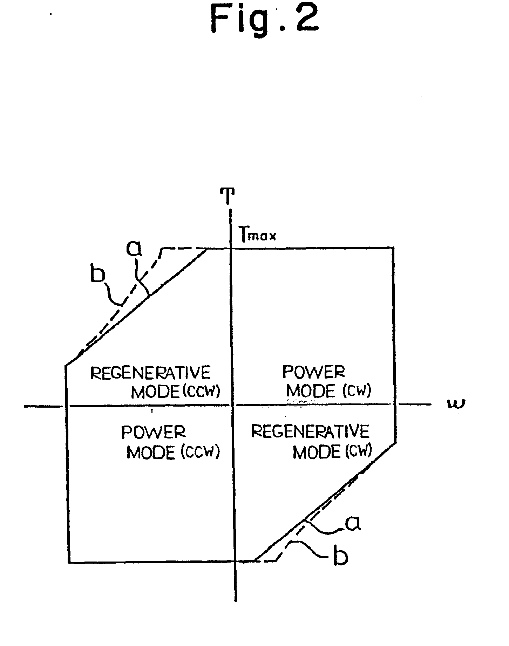

The above operation will be described with reference to a torqe vs. speed curve. FIG. 2 shows a torqe vs. speed curve of the present embodiment. The graph of FIG. 2 has an axis of ordinate indicating torque T and an axis of abscissa indicating speed $\omega$. The first quadrant represents a clockwise power mode, the second quadrant a counterclockwise regenerative mode, the third quadrant a counterclockwise power mode, and the fourth quadrant a clockwise regenerative mode. As shown, the clamp circuit 11 does not affect the operation in the power mode. In the regenerative mode, the torque is clamped linearly as indicated by a on the torque vs. speed curve in FIG. 2 as is apparent from the equation (1) irrespective of the direction of rotation.

Therefore, the torque in the regenerative mode can be clamped with a simple circuit, and the current to charge the battery 7 can be limited to prevent the battery 7 from being damaged.

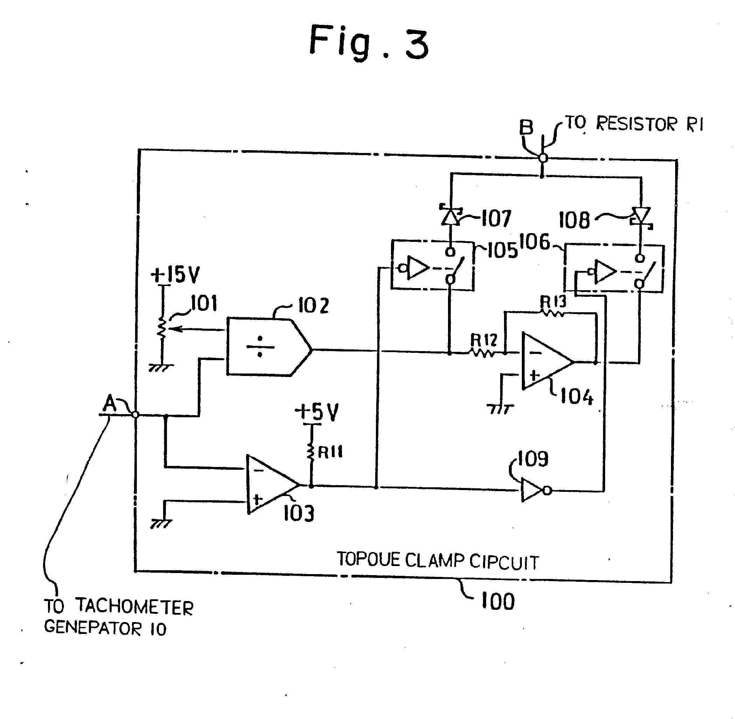

In the above embodiment, the torque clamp circuit is arranged to clamp the torque liniearly on the torque vs. speed curve. However, the torque clamp circuit may be arranged to clamp the torque hyperbolically on the torque vs. speed curve to keep the power constant. This example is indicated by a curve b in FIG. 2. This alternative embodiment is illustrated in FIG. 3. A torque clamp circuit 100 shown in FIG. 3, which may replace the torque clamp circuit 10 in FIG. 1, can clamp the torque, but is different from the torque clamp circuit 10 in FIG. 1 in that the torque clamp circuit 100 clamps the torque so that the power will be constant. A terminal A is connected to the tachometer generator 10 shown in FIG. 1, and a terminal B is connected to the resistor R1. A variable resistor 101 sets a reference voltage for giving an upper limit for the power. A divider 102 effects an arithmetic operation equivalent to

$$T = PL/\omega$$

by dividing the voltage corresponding to the upper limit for the power set by the variable resistor 101, by the feedback voltage from the tachometer generator 10 which is proportional to the rotational motor speed. The direction of speed is detected by a comparator 103. An inverting amplifier 104 serves to invert the output from the divider 102. Analog switches 105, 106 serve to select the polarity of the clamping voltage. Schottky diodes 107, 108 reduce the forward voltage drop across the diodes for the reduction of errors. An inverter 109 inverts the output of the comparator 103 and applies the inverted output to the analog switch 106.

The torque clamp circuit 101 operates as follows: The clamping voltage is determined by the divider 102. When the motor operates clockwise, the feedback voltage from the tachometer generator, i.e., the voltage at the terminal A is positive, so that the output of the comparator 103 becomes "0", rendering the analog switch 105 conductive. When a deceleration command is given to the motor, the output of the speed error amplifier 2 in FIG. 1 becomes negative, and the output of the divider 102 clamps the torque through the analog switch 105 and the zener diode 107.

When the motor rotates counterclockwise, the feedback voltage from the tachometer generator 10 is negative, and the output from the comparator 103 is "1". The output of the inverter 109 becomes "0", rendering the analog switch 106 conductive. The output of the divider 102 is inverted into a negative voltage by the inverting amplifier 104. Therefore, if a deceleration command is given to the motor, the output of the speed error amplifier 2 becomes positive, and the torque is clamped through the analog switch 106 and the zener diode 108.

While the DC servomotor is employed in the above embodiments, the present invention is also applicable to an AC motor.

With the present invention, as described above, since the regenerated energy is limited to a constant level at the time of decelerating the servomotor, the regenerative control can safely be performed without allowing the current with which to charge the battery to exceed the maximaum allowable charging current for the battery.

## CLAIMS

1. A regenerative control method for a servomotor driven by a battery power supply to effect regenerative control upon deceleration, said regenerative control method comprising the steps of:

processing a voltage fed back from a speed feedback unit coupled to said servomotor; and

clamping a speed command with a signal produced by processing the voltage to limit regenerated energy to a constant level.

2. A regenerative control method according to claim 1, wherein said servomotor comprises a servomotor for driving wheels of an automatic carriage vehicle.

3. A regenerative control method according to claim 1, wherein said voltage is processed so that the product of the torque and the rotational speed will be constant.

4. A regenerative control method according to claim 1, wherein said voltage is processed so that the product of the torque and the rotational speed will be linear on a torque vs. speed curve.

5. A regenerative control method according to claim 1, wherein said speed feedback unit comprises a tachometer generator.

6. A regenerative control method according to

- 12 -

claim 1, wherein said voltage fed back from the speed feedback unit clamps the speed command upon clockwise rotation and the speed command upon counterclockwise rotation through two parallel diodes.

Fig. 1  1/3

# Fig.2

# Fig.3

TO RESISTOR RI

TOPOUE CLAMP CIPCUIT
100

TO TACHOMETER
GENEPATOR 10

# INTERNATIONAL SEARCH REPORT

0273978

International Application No   PCT/JP87/00377

## I. CLASSIFICATION OF SUBJECT MATTER (if several classification symbols apply, indicate all) 8

According to International Patent Classification (IPC) or to both National Classification and IPC

Int.Cl$^4$    H02P3/14

## II. FIELDS SEARCHED

### Minimum Documentation Searched 4

| Classification System | Classification Symbols |
|---|---|
| IPC | H02P3/14, 3/18, 5/41 |

### Documentation Searched other than Minimum Documentation to the Extent that such Documents are Included in the Fields Searched 5

| | |
|---|---|
| Jitsuyo Shinan Koho | 1971 - 1987 |
| Kokai Jitsuyo Shinan Koho | 1971 - 1987 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP, A, 57-145502 (Nissan Motor Co., Ltd.) 8 September 1982 (08. 09. 82) (Family: none) | 1-6 |
| A | JP, B, 60-31194 (Meidensha Electric Mfg. Co., Ltd.) 20 July 1985 (20. 07. 85) Page 2, right column, lines 35 to 44 (Family: none) | 1-6 |

* Special categories of cited documents: 15

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search 2 | Date of Mailing of this International Search Report 2 |
|---|---|
| August 28, 1987 (28. 08. 87) | September 14, 1987 (14. 09. 87) |
| International Searching Authority 1 | Signature of Authorized Officer 20 |
| Japanese Patent Office | |

Form PCT/ISA/210 (second sheet) (October 1977)